(19) Europäisches Patentamt
European Patent Office
Office européen des brevets

(11) Veröffentlichungsnummer : **0 514 335 A2**

# (12) EUROPÄISCHE PATENTANMELDUNG

(21) Anmeldenummer : **92810341.5**

(51) Int. Cl.[5] : **C08G 59/56,** C08G 59/66

(22) Anmeldetag : **08.05.92**

(30) Priorität : **17.05.91 CH 1473/91**

(43) Veröffentlichungstag der Anmeldung :
**19.11.92 Patentblatt 92/47**

(84) Benannte Vertragsstaaten :
**AT BE DE FR GB NL**

(71) Anmelder : **CIBA-GEIGY AG**
**Klybeckstrasse 141**
**CH-4002 Basel (CH)**

(72) Erfinder : **Setiabudi, Frans, Dr.**
**Kapellenstrasse 7**
**W-7812 Bad Krozingen (DE)**

## (54) Härtbare Epoxidharz-Stoffgemische enthaltend einen latenten Härter, ein Amin und ein Dithiol.

(57) Härtbare Stoffgemische enthaltend
(a) ein Epoxidharz,
(b) einen latenten Härter für das Epoxidharz, der erst bei einer Temperatur von mindestens 80°C zu reagieren anfängt (gemessen mittels DSC bei einer Aufheizgeschwindigkeit von 10°C/min),
(c) ein Amin mit mindestens einem Aminwasserstoff und
(d) ein Dithiol der Formel (I)

$$HS\text{-}(C_2H_4\text{-}O\text{-}CH_2\text{-}O\text{-}C_2H_4\text{-}S\text{-}S)_n\text{-}C_2H_4\text{-}O\text{-}CH_2\text{-}O\text{-}C_2H_4\text{-}SH \quad (I),$$

worin n eine Zahl zwischen 2 und 26 ist,
wobei der Unterschied der Reaktionsmaxima im DSC-Diagramm bei einer Aufheizgeschwindigkeit von 10°C/min mindestens 30°C beträgt,
eignen sich für die Herstellung von vernetzten Produkten, insbesondere für die Herstellung von flexiblen Prepregs mit unkritischer B-Stufe und sehr guter Lagerfähigkeit.



Jouve, 18, rue Saint-Denis, 75001 PARIS

Die Erfindung betrifft härtbare Stoffgemische enthaltend ein Epoxidharz und bestimmte latente Härter, Amine und Dithiole und die daraus hergestellten vernetzten Produkte, insbesondere Prepregs und Laminate.

Für die Herstellung von Prepregs auf der Basis von Epoxidharzen ohne Verwendung von Lösungsmitteln werden im allgemeinen Mischungen von niederviskosen, flüssigen und hochviskosen bis festen Epoxidharzen eingesetzt. Um diese in wenig klebrige bis trockene Prepregs überführen zu können, müssen sie unter äusserst streng kontrollierten Bedingungen mit Härtern teilweise vorreagiert werden. Man spricht hier üblicherweise von der sogenannten B-Stufenbildung. Im allgemeinen werden mindestens zwei Härter mit unterschiedlicher Reaktivität eingesetzt. Bei den bisherigen Methoden weisen die eingesetzten Härter keinen ausreichenden Reaktivitätsunterschied auf, so dass nach der Vorreaktion mit dem bei tieferer Temperatur reagierenden Härter (Erreichen der B-Stufe) die Vernetzung unerwünschterweise auch bei Raumtemperatur weiter fortschreitet und die Prepregs somit nur eine sehr begrenzte Lagerstabilität haben. Solche Prepregs genügen den heutigen Anforderungen auch in Bezug auf Flexibilität und Klebrigkeit nicht. Erfahrungsgemäss ist es sehr schwierig, die B-Stufenbildung genau zu reproduzieren, was zu unerwünschten Qualitätsschwankungen z.B. bezüglich Klebrigkeit, Flexibilität und Lagerstabilität der Prepregs führt.

Es wurde nun ein Epoxidharz-Bindemittel entwickelt, welches die beschriebenen Nachteile nicht aufweist. Das neue Epoxidharzgemisch zeichnet sich durch eine vollständige Trennung der Härterreaktivität der B-Stufe von der C-Stufe aus, so dass sich die Stabilität der B-Stufe und somit auch die Lagerfähigkeit der Prepregs von einigen Tagen auf mehrere Monate verlängern lässt. Zudem weisen die Prepregs als Folge des für die Herstellung der B-Stufe verwendeten Amin-Thiol-Härtergemisches eine erhöhte Flexibilität auf, welche sich bei geeigneter Wahl des Amins und des Thiols fast beliebig einstellen lässt.

In der EP-Patentanmeldung 429,395 sind bestimmte Amine und Polythiole bereits vorgeschlagen worden.

Gegenstand der Erfindung sind nunmehr härtbare Stoffgemische enthaltend

(a) ein Epoxidharz,

(b) einen latenten Härter für das Epoxidharz, der erst bei einer Temperatur von mindestens 80°C zu reagieren anfängt (gemessen mittels DSC bei einer Aufheizgeschwindigkeit von 10°C/min),

(c) ein Amin mit mindestens einem Aminwasserstoff und

(d) ein Dithiol der Formel (I)

$$HS\text{-}(C_2H_4\text{-}O\text{-}CH_2\text{-}O\text{-}C_2H_4\text{-}S\text{-}S)_n\text{-}C_2H_4\text{-}O\text{-}CH_2\text{-}O\text{-}C_2H_4\text{-}SH \qquad (I),$$

worin n eine Zahl zwischen 2 und 26 ist,

wobei der Unterschied der Reaktionsmaxima im DSC-Diagramm bei einer Aufheizgeschwindigkeit von 10°C/min mindestens 30°C beträgt.

Beim Erhitzen solcher Gemische in einer DSC-Apparatur (DSC = Differential Scanning Calorimeter) zeigt das DSC-Diagramm (Reaktionsenthalpie in Abhängigkeit von der Temperatur) zwei ausgeprägte Maxima und eine klare Basislinien-Trennung. Das erste Reaktionsmaximum ist auf die Umsetzung des Harzes mit dem Amin-Thiol-Gemisch (B-Stufe) zurückzuführen und liegt je nach gewählter Zusammensetzung beispielsweise im Bereich von etwa 80 bis etwa 130°C. Das zweite Maximum resultiert aus der Vernetzung mit dem latenten Härter und liegt beispielsweise im Bereich von etwa 100 bis 200, vorzugsweise etwa 130 bis 160°C.

Je grösser der Temperaturunterschied der zwei Reaktionsmaxima, desto grösser ist die Lagerstabilität der mit dem Gemisch hergestellten Prepregs. Stoffgemische, worin der Unterschied der Reaktionsmaxima mindestens 40°C, insbesondere mindestens 50°C,beträgt, werden daher bevorzugt.

Die GB-Patentschrift 1,350,156 beschreibt die Vorverlängerung von Epoxidharzen mit Verbindungen, welche OH- oder SH-Gruppen enthalten, in Gegenwart bestimmter Bortrifluorid-Amin-Komplexe. Die vorverlängerten Harze werden mit den üblichen Härtern für Epoxidharze, wie z.B. Aminen, Anhydriden oder katalytischen Härtern, vernetzt und als Giessharze, Klebstoffe oder Dichtungsmassen eingesetzt.

Als Epoxidharz (a) der erfindungsgemässen Stoffgemische kann im Prinzip jede in der Technik der Epoxidharze übliche Verbindung eingesetzt werden.

Beispiele für Epoxidharze sind:

I) Polyglycidyl- und Poly(β-methylglycidyl)ester erhältlich durch Umsetzung einer Verbindung mit mindestens zwei Carboxylgruppen im Molekül und Epichlorhydrin bzw β-Methyl-epichlorhydrin. Die Umsetzung erfolgt zweckmässig in Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen und Epichlorhydrin oder β-Methylepichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan-1,2-diol oder Poly(oxypropylen)glykolen, Propan-1,3-diol, Butan-1,4-diol, Poly(oxytetramethylen)glykolen, Pentan-1,5-diol, Hexan-1,6-diol, Hexan-2,4,6-triol, Glycerin, 1,1,1-Trimethylolpropan, Pentaerythrit oder Sorbit, sowie von Polyepichlorhydrinen.

Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)anilin oder p,p′-Bis(2-hydroxyethylamino)diphenylmethan.

Die Epoxidverbindungen können sich auch von einkerningen Phenolen ableiten, wie beispielsweise von Resorcin oder Hydrochinon; oder sie basieren auf mehrkernigen Phenolen, wie beispielsweise Bis(4-hydroxyphenyl)methan, 4,4′-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan oder 2,2-Bis(3,5-dibrom-4-hydroxyphenyl)propan, sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol oder 4-tert-Butylphenol, oder durch Kondensation mit Bisphenolen, so wie oben beschrieben.

III) Poly(N-glycidyl)verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)methan, m-Xylylendiamin oder Bis(4-methylaminophenyl)methan.

Zu den Poly(N-glycidyl)verbindungen zählen aber auch Triglycidylisocyanurat, N,N′-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl)verbindungen, beispielsweise Di-S-glycidylderivate, die sich von Dithiolen, wie beispielsweise Ethan-1,2-dithiol oder Bis (4-mercaptomethylphenyl)ether, ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3′,4′-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N′-(2-glycidyloxypropyl)-5,5-dimethylhydantoin oder 2-Glycidyloxy- 1,3-bis(5,5-dimethyl-1-glycidylhydantoin-3-yl)propan.

Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.

Besonders bevorzugt als Epoxidharze werden Polyglycidylether von mehrwertigen Phenolen, wie beispielsweise von 2,2-Bis(4-hydroxyphenyl)propan (Bisphenol A) oder Bis(4-hydroxyphenyl)methan (Bisphenol F) oder von Novolaken. Die verwendeten Epoxidharze sind vorzugsweise flüssig, d.h. es handelt sich entweder um flüssige Harze oder um flüssige Gemische fester und flüssiger Harze.

Am meisten bevorzugt als Epoxidharze werden Diglycidylether von Bisphenol A oder Bisphenol F, Epoxinovolake oder 4,4′-Diaminodiphenylmethan-Tetraglycidylderivate.

Als latenter Härter (b) kann im Prinzip jede für diesen Zweck bekannte Verbindung, welche der erfindungsgemässen Definition genügt, eingesetzt werden, d.h. jede Verbindung, welche dem Epoxidharz gegenüber unterhalb der definierten Grenztemperatur von 80°C inert ist, die aber schnell unter Vernetzung des Harzes reagiert, sobald diese Grenztemperatur überschritten ist. Die Grenztemperatur der erfindungsgemäss verwendeten latenten Härter ist vorzugsweise mindestens 85°C, insbesondere mindestens 100°C. Solche Verbindungen sind wohlbekannt und auch im Handel erhältlich.

Beispiele geeigneter latenter Härter sind Dicyandiamid, Cyanoguanidine, wie z.B. die in dem US-Patent 4,859,761 oder der EP-A 306,451 beschriebenen Verbindungen, aromatische Amine, wie z.B. 4,4′- oder 3,3′-Diaminodiphenylsulfon, oder Guanidine, wie z.B. 1-o-Tolylbiguanid, oder modifizierte Polyamine, wie z.B. Ancamine® 2014 S (Anchor Chemical UK Limited, Manchester).

Geeignete latente Härter sind auch N-Acylimidazole, wie z.B. 1-(2′,4′,6′-Trimethylbenzoyl)-2-phenylimidazol oder 1-Benzoyl-2-isopropylimidazol. Solche Verbindungen sind beispielsweise in den US-Patentschriften

4,436,892 oder 4,587,311 oder dem JP-Patent 743,212 beschrieben.

Weitere geeignete Härter sind Metallsalzkomplexe von Imidazolen, wie z.B. in den US-Patenten 3,678,007 oder 3,677,978 beschrieben, Carbonsäurehydrazide, wie z.B. Adipinsäuredihydrazid, Isophthalsäuredihydrazid oder Anthranilsäurehydrazid, Triazinderivate, wie z.B. 2-Phenyl-4,6-diamino-s-triazin (Benzoguanamin) oder 2-Lauryl-4,6-diamino-s-triazin (Lauroguanamin) sowie Melamin und dessen Derivate. Die letztgenannten Verbindungen sind z.B. in der US-Patentschrift 3,030,247 beschrieben.

Als latente Härter geeignet sind auch Cyanacetylverbindungen, wie z.B. im US-Patent 4,283,520 beschrieben, beispielsweise Neopentylglykolbiscyanessigester, Cyanessigsäure-N-isobutylamid, 1,6-Hexamethylen-bis-cyanacetat oder 1,4-Cyclohexandimethanol-bis-cyanacetat.

Geeignete latente Härter sind auch N-Cyanacylamid-Verbindungen wie z.B. N,N'-Dicyanadipinsäurediamid. Solche Verbindungen sind z.B. in den US-Patenten 4,529,821, 4,550,203 und 4,618,712 beschrieben.

Weitere geeignete latente Härter sind die in der US-Patentschrift 4,694,096 beschriebenen Acylthiopropylphenole und die in der US-Patentschrift 3,386,955 offenbarten Harnstoffderivate wie beispielsweise Toluol-2,4-bis(N,N-dimethylcarbamid).

Bevorzugte latente Härter sind 4,4'-Diaminodiphenylsulfon und insbesondere Dicyandiamid.

Falls zweckmässig, können die erfindungsgemässen Stoffgemische auch Beschleuniger (e) für die Reaktion des Epoxidharzes mit dem latenten Härter (b) enthalten. Geeignete Beschleuniger (e) sind z.B. Harnstoffderivate, wie
N,N-Dimethyl-N'-(3-chlor-4-methylphenyl)harnstoff (Chlortoluron),
N,N-Dimethyl-N'-(4-chlorphenyl)harnstoff (Monuron) oder N,N-DimethylN'-(3,4-dichlorphenyl)harnstoff (Diuron), 2,4-Bis(N',N'-dimethylureido)toluol oder
1,4-Bis(N',N'-dimethylureido)benzol. Die Verwendung dieser Verbindungen ist beispielsweise in der oben erwähnten US-Patentschrift 4,283,520 beschrieben. Als Beschleuniger geeignet sind z.B. auch die in der GB-A 1,192,790 beschriebenen Harnstoffderivate.

Geeignete Beschleuniger sind auch Imidazole, wie z.B. Imidazol, 2-Ethyl-, 2-Phenyl- oder 1-Methylimidazol, 1-Cyanoethyl-2-ethyl-4-methylimidazol oder 2-Ethyl-4-methylimidazol.

Weitere geeignete Beschleuniger sind auch tertiäre Amine, deren Salze, oder quaternäre Ammoniumverbindungen, wie Benzyldimethylamin, 2,4,6-Tris(dimethylaminomethyl)phenol, 4-Aminopyridin, Tripentylammoniumphenolat, Tetramethylammoniumchlorid oder Benzyltributylammoniumbromid oder -chlorid; oder Alkalimetallalkoholate, wie Na-Alkoholate von 2,4-Dihydroxy-3-hydroxymethylpentan.

Als Beschleuniger eignen sich ebenfalls die in der EP-A 200,678 beschriebenen festen Lösungen aus einer Stickstoffbase und einem Phenol-Aldehyd-Harz, sowie die in der EP-A 351,365 offenbarten Mannich-Basen von polymeren Phenolen.

Bevorzugte Beschleuniger (e) sind Imidazole oder Harnstoffderivate.

Die Aminkomponente (c) der erfindungsgemässen Stoffgemische kann, wie erwähnt, jedes Amin mit mindestens einem Aminwasserstoff sein. Die Amine können ein oder mehrere primäre, sekundäre oder tertiäre Stickstoffatome enthalten.

Beispiele für geeignete Amine (c) sind aliphatische, cycloaliphatische, aromatische und heterocyclische Amine, wie Bis(4-aminophenyl)methan, Anilin-Formaldehyd-Harze, Benzylamin, n-Octylamin, Propan- 1,3-diamin, 2,2-Dimethyl- 1,3-propandiamin (Neopentandiamin), Hexamethylendiamin, Diethylentriamin, Bis(3-aminopropyl)amin, N,N-Bis(3-aminopropyl)methylamin, Triethylentetramin, Tetraethylenpentamin, Pentaethylenhexamin, 2,2,4-Trimethylhexan-1,6-diamin, m-Xylylendiamin, 1,2- und 1,4-Diaminocyclohexan, Bis(4-aminocyclohexyl)methan, Bis (4-amino-3-methylcyclohexyl)methan, 2,2-Bis(4-aminocyclohexyl)propan und 3-Aminomethyl-3,5,5-trimethylcyclohexylamin (Isophorondiamin), Polyaminoimidazoline sowie Polyaminoamide, wie beispielsweise solche aus aliphatischen Polyaminen und dimerisierten oder trimerisierten Fettsäuren. Geeignete Amine (c) sind auch die als Jeffamine® bekannten Polyoxyalkylenamine der Firma Texaco, wie z.B. Jeffamine® EDR 148, D 230, D 400 oder T 403.

Weitere geeignete Amine sind 1, 14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl- 1,3-diaminopropan, N,N-Dimethyl- 1,3-diaminopropan, sekundäre Polyoxypropylendi- und -triamine, wie z.B. die EPS 7315 und EPS 7325 Produkte der Texaco, 2,5-Diamino-2,5-dimethylhexan, Bis(aminomethyl)tricyclopentadien, m-Aminobenzylamin,1,8-Diamino-p-menthan,Bis(4-amino-3,5-dimethylcyc1ohexyl)methan, 1,3-Bis(aminomethyl)cyclohexan, Dipentylamin, Bis(4-amino-3,5-diethylphenyl)methan, 3,5-Diethyltoluol-2,4-diamin und 3,5-Diethyltoluol-2,6-diamin.

Bei Verwendung von cycloaliphatischen oder aliphatischen Aminen werden vorzugsweise keine Glycidylester als Harzkomponente eingesetzt.

Die verwendeten Amine (c) haben vorzugsweise mindestens eine, insbesondere mindestens zwei $NH_2$-Gruppen.

Bevorzugt als Komponente (c) der erfindungsgemässen Stoffgemische sind cycloaliphatische oder aliphatische Amine. Unter den cycloaliphatischen Aminen besonders bevorzugt sind 1,2-Diaminocyclohexan, 3-Aminomethyl-3,5,5-trimethylcyclohexylamin (Isophorondiamin), Bis(4-aminocyclohexyl)methan und Polyaminoimidazoline, wie beispielsweise das als Eurodur® 370 vertriebene Polyaminoimidazolin der Firma Schering AG. Unter den aliphatischen Aminen (c) werden Verbindungen der Formeln II bis VII bevorzugt

$H_2N\text{-}R\text{-}NH_2$ (II),

$H_2N(CH_2CH_2O)_aCH_2CH_2NH_2$ (III),

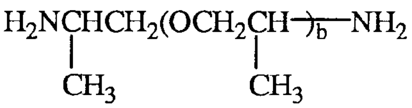 (IV), 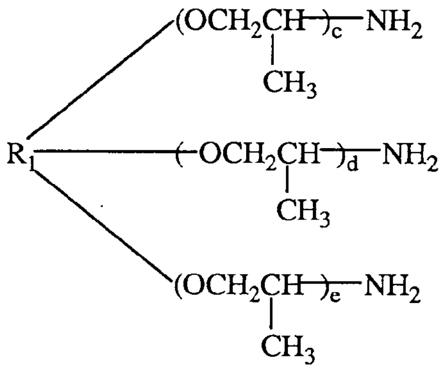 (V),

$H_2N(CH_2CH_2CH_2NH)_fCH_2CH_2CH_2NH_2$ (VI),

$H_2N(CH_2CH_2NH)_gCH_2CH_2NH_2$ (VII),

worin R ein geradkettiger oder verzweigter $C_2$-$C_{10}$-Alkylenrest ist, a eine ganze Zahl von 1-10, vorzugsweise 2, b eine ganze Zahl von 1-10, vorzugsweise 2-6, c, d, und e unabhängig voneinander eine ganze Zahl von 1 -20, vorzugsweise 2-5, f eine ganze Zahl von 1-5, vorzugsweise 1, und g eine ganze Zahl von 1-10, vorzugsweise 1-5, sind und $R_1$ für einen dreiwertigen Rest der Formeln

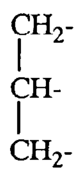

oder insbesondere

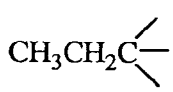

steht.

Ganz besonders bevorzugt werden 2,2,4-Trimethylhexan-1,6-diamin, Jeffamine® EDR 148 der Formel III mit a = 2, Jeffamine® D 230 bzw. D 400 der Formel IV mit b = 2-3 bzw. b = 5-6, Jeffamine® T 403 der Formel V, Bis(3-aminopropyl)amin, Diethylentriamin, Triethylentetramin, 2,2-Dimethyl-1,3-propandiamin und Pentaethylenhexamin.

Am meisten bevorzugte Amine sind n-Octylamin, 4,4′-Diaminodicyclohexylmethan, Jeffamine® EDR-148, Laromin® C-260 (BASF, 3,3′-Dimethyl-4,4′-diaminodicyclohexylmethan), 1,2-Diaminocyclohexan und Isophorondiamin.

Die Amine (c) wirken zusammen mit den Dithiolen (d) als Härtungsmittel in der ersten Stufe der Vernetzung. Die Verbindungen der Formel (I) sind beispielsweise aus Ind. Eng. Chem. 48, 98 (1956) bekannt und zum Teil unter dem Namen Thiokol® im Handel erhältlich.

Vorzusweise werden Verbindungen der Formel (I) eingesetzt, worin n eine Zahl zwischen 2 und 6 bedeutet.

Besonders bevorzugt sind Verbindungen der Formel (I) mit einem Molekulargewicht zwischen 900 und 1100.

Die erfindungsgemässen Gemische können, falls zweckmässig, noch Beschleuniger für die Amin/Thiol-Härtung enthalten, wie z.B. Phenole, wie Nonylphenol oder Resorcin, oder organische Säuren, wie p-Toluolsulfonsäure.

Die Mengenverhältnisse der Komponenten der erfindungsgemässen Stoffgemische können je nach spezifischer Zusammensetzung stark variieren. Geeignete Mengen des latenten Härters liegen z.B. im Bereich von etwa 3-60, vorzugsweise etwa 6-30 Gewichtsteilen pro 100 Gewichtsteile des Epoxidharzes.

Bevorzugt werden im allgemeinen Gemische, bei denen etwa 5-60 %, insbesondere etwa 10-35 % der Epoxidgruppen des Harzes bei der Herstellung der B-Stufe mit dem Amin/Thiolgemisch vernetzt werden, und die restlichen Epoxidgruppen mit dem latenten Härter gehärtet werden.

Auch das Aequivalenzverhältnis der NH- zu den SH-Gruppen kann stark variieren, je nach Art des verwendeten Thiols bzw. Amins und je nach dem, welche Eigenschaften der B-Stufe erwünscht sind. Als geeignet haben sich z.B. NH/SH-Aequivalenzverhältnisse von etwa 15:1 bis etwa 1:6 erwiesen.

Die eingesetzten Mengen der Komponenten (c) und (d) werden auch vom Anwendungszweck, d.h. von der erwünschten Flexibilität der B-Stufe sowie von der gewünschten Gebrauchsdauer des Stoffgemisches abhängen. Im allgemeinen steigen sowohl die Flexibilität als auch die Gebrauchsdauer mit der Erhöhung der relativen Mengen des Thiols im Thiol/Amin-Gemisch.

Die Mengen des gegebenenfalls beigefügten Beschleunigers (e) für die Härtung mit dem latenten Härter (b) oder des Beschleunigers für die Härtung mit dem Amin (c) und dem Thiol (d) sind für jede Art des Beschleunigers dem Fachmann bekannt.

Beispiele für geeignete Mengen der einzelnen Komponenten der erfindungsgemässen Stoffgemische sind aus den Zusammensetzungen der Ausführungsbeispiele ersichtlich.

Die erfindungsgemässen Gemische können auch aus einer Lösung, beispielsweise in Methylethylketon, heraus verarbeitet werden, wobei sich die Temperatur für die B-Stufen-und die C-Stufen-Härtung nicht ändert.

Gewünschtenfalls kann man den härtbaren Gemischen zur Herabsetzung der Viskosität reaktive Verdünner, wie z.B. Butandioldiglycidylether, Monoglycidylether isomerer höherer Alkohole, wie z.B. Grilonit RV 1814® der Fa. Ems-Chemie, oder Butylglycidylether, 2,2,4-Trimethylpentylglycidylether, Phenylglycidylether, Kresylglycidylether oder Glycidylester, zusetzen.

Die erfindungsgemässen Stoffgemische können auch Haftvermittler enthalten. Im Prinzip kann jeder bekannte Haftvermittler verwendet werden. Als besonders geeignete Haftvermittler haben sich Silane, wie z.B. $\gamma$-Glycidyloxypropyltrimethoxysilan (Silan A-187 der Fa. Union Carbide) oder $\gamma$-Mercaptopropyltrimethoxysilan (Silan A-189 der Fa. Union Carbide) oder Titanverbindungen, wie Tetraisopropyl-bis(dioctylphosphonato)-titanat (KR 41B der Fa. Kenrich Petrochemicals, Inc. USA), erwiesen.

Als weitere übliche Zusätze können die erfindungsgemässen Gemische ferner Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Antioxidantien und Lichtschutzmittel, enthalten.

Die Herstellung der erfindungsgemässen Stoffgemische kann in üblicher Weise durch Vermischen der Komponenten mit Hilfe bekannter Mischaggregate (Rührer, Walzen) erfolgen.

Die erfindungsgemässen Gemische lassen sich beispielsweise als Klebstoffe (Klebfilme, Hot-melts, Pasten, Ein-Komponenten-Kleber, Patches), Matrixharze, Lacke, Dichtungsmassen oder Injektionsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Dichtungsmassen, Anstrichmittel, Beschichtungsmassen, Lacke, Tauchharze, Giessharze, Bodenbeläge und insbesondere als Imprägnierharze, Laminierharze, Matrixharze und Klebemittel, verwendet werden.

Die Erfindung betrifft daher auch vernetzte Produkte erhältlich durch Härtung der erfindungsgemässen Stoffgemische.

Die Härtung der Stoffgemische erfolgt vorzugsweise im Temperaturbereich von etwa 80-180°C. Nach z.B. etwa 2-10 Minuten bei 90-120°C ist die Härtungsreaktion mit dem Amin/Thiol-Härter abgeschlossen, und es wird ein lagerstabiles, unkritisches B-Stufen-System erhalten, welches eine ausgezeichnete Flexibilität und Klebrigkeit aufweist. Die vollständige Vernetzung unter Formgebung erfolgt vorzugsweise bei etwa 100- 180°C während etwa 20-60 Minuten.

Die vernetzten Systeme weisen ausgezeichnete mechanische und thermische Eigenschaften auf, auch wenn die vollständige Härtung erst nach längerer Lagerung (mehrere Wochen bis Monate) der härtbaren Gemische oder der B-Stufe erfolgt.

Wie erwähnt, eignen sich die erfindungsgemässen Stoffgemische insbesondere als Imprägnierharze für die Herstellung von Faserverbundmaterialien. Gegenstand der Erfindung sind somit auch Faserverbundmaterialien imprägniert mit einem erfindungsgemässen Stoffgemisch, Prepregs erhältlich durch Imprägnierung eines Gewebes mit einem erfindungsgemässen Stoffgemisch und anschliessendes Erhitzen des imprägnierten Gewebes bis die Reaktion des Epoxidharzes (a) mit dem Amin (c) und dem Thiol (d) abgeschlossen ist, und ohne dass dabei die Umsetzung des Epoxidharzes (a) mit dem latenten Härter (b) einsetzt, sowie die durch vollständige Aushärtung der Prepregs erhältlichen Laminate.

Weiterhin können die erfindungsgemässen Stoffgemische als Klebstoffe, insbesondere Hotmelt-Reaktionskleber und Klebfilme, eingesetzt werden. Nach der Bildung der B-Stufe bei einer Temperatur zwischen 25 und 50 °C erhält man lagerstabile Klebstoffpasten, die mit oder ohne Zusatz von Füllstoffen verarbeitet werden können. Die Viskosität des Klebstoffs kann durch den Anteil an B-Stufe beliebig variiert werden.

Die folgenden Beispiele erläutern die Erfindung.

Beispiele 1-9:

In den in Tabelle 1 definierten Zusammensetzungen werden die folgenden Komponenten eingesetzt:

Epoxidharz 1:

Ein Bisphenol A-diglycidylether mit einem Epoxidäquivalentgewicht von 186,2 g/val.

Epoxidharz 2:

Ein Epoxikresolnovolak mit einem Epoxidäquivalentgewicht von 235 g/val.

Latenter Härter 1:

Eine Mischung aus
25,5 Gewichtsteilen Dicyandiamid,
12,5 Gewichtsteilen Chlortoluron [(N,N-Dimethyl-N′-(3-chlor-4-methylphenyl)harnstoff],
46,5 Gewichtsteilen Bisphenol A-diglycidylether mit einem Epoxidäquivalentgewicht von 192,3 g/val und
15,5 Gewichtsteilen Bisphenol A-diglycidylether mit einem Epoxidäquivalentgewicht von 222,2 g/val.

Latenter Härter 2:

Eine Mischung aus
28 Gewichtsteilen Dicyandiamid und
72 Gewichtsteilen Bisphenol A-diglycidylether mit einem Epoxidäquivalentgewicht von 192,3 g/val.

Latenter Härter 3:

4,4′-Diaminodiphenylsulfon.

Die Zusammensetzungen werden durch Vermischen aller Bestandteile, gegebenenfalls unter leichtem Erhitzen, hergestellt.

Herstellung von Prepregs (PP) und Laminaten:

Ein Glasgewebe der Fa. Interglas (92146-I-550) (43 x 25 cm) wird auf einer Folie mit dem Bindemittelgemisch bei 50°C imprägniert. Um die Luft zu entfernen und das Bindemittel optimal zu verteilen, rollt man einen Glasstab über das Prepreg. Um die B-Stufe zu erreichen, wird das Prepreg jeweils auf einer Heizplatte bei 100 °C während 5 Minuten erwärmt. Für die Laminatherstellung wird das Prepreg in gleich grosse Teile (6,5 x 9,9 cm) geschnitten. Die Folien werden entfernt, zwölf Prepreglagen werden aufeinandergelegt und so in einer Form auf der Presse mit max. 5 MPa verpresst und bei entsprechender Temperatur ausgehärtet. Die Dicke des Laminats beträgt 3-3,3 mm. Die Prüfkörper für Messungen der Interlaminarenscherfestigkeit (vgl. Tabelle 3) werden aus dem so hergestellten Laminat geschnitten.

Die Gelierzeit bei 50°C (vgl. Tabelle 3) wird mit einem Techne Gelation Timer GT 3 der Fa. Techne Ltd., Cambridge, U.K. bestimmt. Die Gelierzeit bei 120°C (vgl. Tabelle 4) wird auf einer Gelierzeitheizplatte mit Automatik bestimmt. Dabei wird ein Drahtbügel (∅ 0,4 mm) durch die Substanz gezogen, bis eine bestimmte Festigkeit der Substanz erreicht wird.

Die Viskosität wird mit einem ICI Kegel-Platte Viskosimeter der Fa. Epprecht Instruments, Dottikon, Schweiz bestimmt.

Die DSC- und Tg Messungen werden mit einem Mettler Thermoanalytischen System TA 3000 vorgenommen.

Tabelle 1:

| Beispiel Nr. | 1 | 2 | 3 | 4 | 5 | 6 | 7 | 8 | 9 |
|---|---|---|---|---|---|---|---|---|---|
| Epoxidharz 1 | 70 | 70 | 70 | 70 | 100 | 100 | 100 | 70 | 70 |
| Epoxidharz 2 | 30 | 30 | 30 | 30 | | | | 30 | 30 |
| Latenter Härter 1 | 32 | 35 | 34 | 34 | | | | 32 | 32 |
| Latenter Härter 2 | | | | | | 38 | | | |
| Latenter Härter 3 | | | | | 33 | | | | |
| 1-Benzoyl-2-isopropylimidazol | | | | | | 2,3 | | | |
| 2,4-Bis-(N',N'dimethylureido)-benzol | | | | | | | 6 | | |
| Isophorondiamin | 3 | | | | 2 | 2,1 | 2 | 3 | 3 |
| 3,3'-Dimethyl-4,4'-diamino-dicyclohexylmethan | | 3 | | | | | | | |
| Jeffamine® EDR-148 [1] | | | 3 | | | | | | |
| Triethylentetramin | | | | 2 | | | | | |
| 1-Cyanoethyl-2-ethyl-4-methylimidazol | | | | | 1,7 | | | | |
| Thiokol® LP-3 [2] | 3 | 3 | 3 | 3 | 6 | 3 | 7 | | |
| Thiokol® ZL 1649 [3] | | | | | | | | 4 | |
| Thiokol® LP 977 [4] | | | | | | | | | 5 |
| B-Stufe max [°C] [5] | 95,4 | 91,6 | 96,4 | 91,3 | 100 | 100 | 99,0 | 95,9 | 96,9 |
| C-Stufe max [°C] [5] | 146,4 | 146,3 | 146,3 | 145,4 | 147,0 | 161,0 | 158,0 | 146,9 | 147,4 |

1) $H_2N(CH_2CH_2O)_2CH_2CH_2NH_2$ der Fa. Texaco

2) $HS\text{-}(C_2H_4\text{-}O\text{-}CH_2\text{-}O\text{-}C_2H_4\text{-}S\text{-}S)_n\text{-}C_2H_4\text{-}O\text{-}CH_2\text{-}O\text{-}C_2H_4\text{-}SH$ der Fa. Thiokol mit einem Molekulargewicht von 1000 und einem Mercaptangehalt von 5,9-7,7 %

3) $HS\text{-}(C_2H_4\text{-}O\text{-}CH_2\text{-}O\text{-}C_2H_4\text{-}S\text{-}S)_n\text{-}C_2H_4\text{-}O\text{-}CH_2\text{-}O\text{-}C_2H_4\text{-}SH$ der Fa. Thiokol mit einem Molekulargewicht von 4000, einer Viskosität von 20-25 Pa·s und einem Schwefelgehalt von 800-1200 ppm

4) $HS\text{-}(C_2H_4\text{-}O\text{-}CH_2\text{-}O\text{-}C_2H_4\text{-}S\text{-}S)_n\text{-}C_2H_4\text{-}O\text{-}CH_2\text{-}O\text{-}C_2H_4\text{-}SH$ der Fa. Thiokol mit einem Molekulargewicht von 4000 und einer Viskosität von 7,5-12,5 Pa·s

5) Bestimmt mittels DSC (auf Mettler TA 3000; Heizgeschwindigkeit 10 °C/min)

Tabelle 2: Raumtemperaturstabilität der Prepregs (PP)

| Zusammensetzung aus Beispiel Nr. | Klebrigkeit bis x Tage | | | Flexibilität bis x Tage | |
|---|---|---|---|---|---|
| | stark | mittel | wenig | sehr gut | gut |
| 1 | 2 | 43 | 48 | 43 | 48 |
| 2 | 43 | 60 | | 60 | |
| 3 | 9 | 15 | 18 | 15 | 20 |
| 4 | 1 | 7 | 16 | 8 | 20 |
| 5 | 1 | 5 | 6 | 3 | 6 |
| 6 | 13 | 21 | | 21 | |
| 7 | 1 | 6 | 11 | 8 | 12 |
| 8 | 3 | 40 | | | |
| 9 | 3 | 40 | | | |

[1] Die Prepregs werden durch Erhitzen des imprägnierten Gewebes während der angegebenen Zeit und bei der angegebenen Temperatur hergestellt.

Tabelle 3: Eigenschaften der Zusammensetzungen und der gehärteten Produkte

| Zusammensetzung aus Beispiel Nr. | $T_g$/°C[1)] | ILS (ASTM-D-2344)[2)] A (N/mm²) | B (N/mm²) | PP-Alter (Tage) | Gelierzeit[3)] bei 50 °C (Minuten) | Viskosität[4)] bei 50 °C (mPa·s) |
|---|---|---|---|---|---|---|
| 1 | 126 | 58,0 | 57,5 | 9 | 2346 | 4000 |
| 2 | 119 | 60,5 | 58,8 | 30 | 2666 | 4400 |
| 3 | 115 | 60,3 | 60,7 | 17 | 270 | 3760 |
| 4 | 121 | 62,1 | 61,0 | 9 | 1157 | 5760 |
| 5 | 98 | 65,7 | 62,4 | 4 | 399 | 1100 |
| 6 | 121 | 62,0 | | 12 | 1017 | 560 |
| 7 | 80 | 60,0 | | 3 | 748 | 460 |
| 8 | 118 | 59,0 | | 4 | 2583 | 6240 |
| 9 | 114 | 63,0 | | 7 | 2822 | 6400 |

1) $T_g$-Onset (Mettler TA 3000) gemessen nach Härtung bei 130 °C während 35 min.

2) Interlaminare Scherfestigkeit gemessen an Laminaten mit einem Harzgehalt von ca. 22 Gew.% nach Härtung bei 130 °C während 35 min; A gemessen nach der Härtung; B gemessen nach der Härtung und nach 1 h in kochendem Wasser.

3) Gemessen mittels Techne Gelation Timer GT 3.

4) Gemessen an frisch hergestellten Zusammensetzungen.

Tabelle 4: Gelierzeit der Zusammensetzungen gemäss Beispielen 1-9 bei 120 °C in Abhängigkeit von deren Lagerdauer bei Raumtemperatur

| Lagerdauer | Gelierzeit [min/sec] | | | | | | | | |
|---|---|---|---|---|---|---|---|---|---|
| | 1 | 2 | 3 | 4 | 5 | 6 | 7 | 8 | 9 |
| frisch | 7’49” | 11’02” | 10’54” | 10’02” | 8’58” | 26’57” | 16’53” | | |
| 1 Tag | 12’05” | 15’19” | 19’35” | 15’52” | 7’23” | 15’37” | 17’11” | | |
| 2 Tage | 18’14” | 16’40” | 20’28” | 15’56” | 4’42” | 15’10” | 21’12” | | |
| 3 Tage | 16’06” | 16’50” | 19’00” | 15’10” | 2’58” | 16’32” | 23’41” | 16’43” | 13’49” |
| 4 Tage | 21’06” | 17’49” | 19’53” | 16’06” | 1’56” | | 24’58” | | |
| 8 Tage | 17’11” | 16’59” | 14’30” | | | | 21’00” | 15’43” | 19’50” |
| 10 Tage | 15’49” | 18’25” | | | | 7’47” | 26’33” | | |
| 13 Tage | 20’01” | 21’51” | 14’47” | 11’22” | | | 26’45” | | |
| 15 Tage | 17’33” | 22’03” | 14’22” | | | | 26’33” | 17’25” | 13’38” |

Tabelle 5: Zugscherfestigkeit der Verklebungen (Härtung während 35 Minuten bei 130°C) von Aluminiumblechstreifen mit Bindemittel in Abhängigkeit von der Lagerdauer bei Raumtemperatur

| Lagerdauer | Zugscherfestigkeit (DIN 53283) [$N/mm^2$] | | | | | | | | |
|---|---|---|---|---|---|---|---|---|---|
| | 1 | 2 | 3 | 4 | 5 | 6 | 7 | 8 | 9 |
| frisch | 16,34 | 18,22 | 17,35 | 17,14 | 12,66 | 14,35 | 24,67 | 15,6 | 16,7 |
| 2 Tage | 15,05 | 17,64 | 18,05 | 16,66 | | 18,50 | 23,97 | | |
| 3 Tage | | | | | | | | 14,8 | 14,7 |
| 5 Tage | 16,38 | 16,17 | 17,59 | 16,05 | | 17,39 | 24,31 | | |
| 7 Tage | | | | | | | | 16,3 | 15,5 |
| 9 Tage | | 17,3 | | | | 17,8 | 25,4 | | |

Beispiele 10- 11: Verwendung der Zusammensetzungen als Hotmelt-Reaktionskleber

Die in Tabelle 6 beschriebenen Zusammensetzungen werden bei 40 °C gelagert. Nach verschiedenen Lagerzeiten werden die Gelierzeiten sowie die Zugscherfestigkeiten der Verklebungen (Härtung während 30 Minuten bei 160 °C) von Aluminiumblechstreifen gemessen.

Beschleuniger 1: Chlortoluron
Beschleuniger 2: Imidazolin der Formel

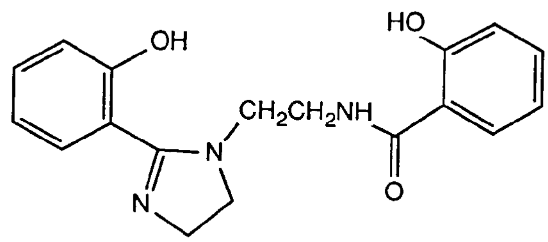

(Beispiel 1 aus der EP-A 388 359)

Tabelle 6:

| Formulierung | Beispiel 10 | Beispiel 11 |
|---|---|---|
| Epoxidharz 1 | 100 | 100 |
| Dicyandiamid | 10 | 3 |
| Beschleuniger 1 | 0,5 | |
| Beschleuniger 2 | | 10 |
| Isophorondiamin | 1,1 | 1,1 |
| Thiokol LP-3 | 5 | 10 |
| Gelierzeit bei 140 °C | | |
| nach 10 Tagen Lagerung bei 40 °C | 10'26'' | |
| nach 11 Tagen " " " | | 11'49'' |
| nach 21 Tagen " " " | 9'42'' | 15'52'' |
| nach 42 Tagen " " " | | 13'20'' |
| Zugscherfestigkeit [N/mm²] | | |
| nach 1 Tag Lagerung bei 40 °C | | 18,4 |
| nach 3 Tagen " " " | 21,9 | |
| nach 4 Tagen " " " | | 18,7 |
| nach 7 Tagen " " " | 20,3 | |
| nach 10 Tagen " " " | 21,4 | |
| nach 11 Tagen " " " | | 18,0 |
| nach 21 Tagen " " " | 19,2 | 18,5 |
| nach 42 Tagen " " " | | 21,0 |

## Patentansprüche

**1.** Härtbares Stoffgemisch enthaltend
(a) ein Epoxidharz,

(b) einen latenten Härter für das Epoxidharz, der erst bei einer Temperatur von mindestens 80 °C zu reagieren anfängt (gemessen mittels DSC bei einer Aufheizgeschwindigkeit von 10 °C/min),
(c) ein Amin mit mindestens einem Aminwasserstoff und
(d) ein Dithiol der Formel (I)

$$HS\text{-}(C_2H_4\text{-}O\text{-}CH_2\text{-}O\text{-}C_2H_4\text{-}S\text{-}S)_n\text{-}C_2H_4\text{-}O\text{-}CH_2\text{-}O\text{-}C_2H_4\text{-}SH \qquad (I),$$

worin n eine Zahl zwischen 2 und 26 ist,
wobei der Unterschied der Reaktionsmaxima im DSC-Diagramm bei einer Aufheizgeschwindigkeit von 10°C/min mindestens 30°C beträgt.

**2.** Stoffgemisch nach Anspruch 1, wobei der Unterschied der Reaktionsmaxima mindestens 40°C, vorzugsweise mindestens 50°C, beträgt.

**3.** Stoffgemisch nach Anspruch 1, worin das Epoxidharz (a) flüssig ist.

**4.** Stoffgemisch nach Anspruch 1, worin das Epoxidharz (a) ein Polyglycidylether eines mehrwertigen Phenols oder eines Novolaks ist.

**5.** Stoffgemisch nach Anspruch 1, worin das Epoxidharz (a) ein Diglycidylether von Bisphenol A oder Bisphenol F, ein Epoxinovolak oder ein Tetraglycidylderivat von 4,4′-Diaminodiphenylmethan ist.

**6.** Stoffgemisch nach Anspruch 1, worin der latente Härter (b) 4,4′-Diaminodiphenylsulfon oder insbesondere Dicyandiamid ist.

**7.** Stoffgemisch nach Anspruch 1, worin das Amin (c) mindestens eine, vorzugsweise zwei $NH_2$-Gruppen hat.

**8.** Stoffgemisch nach Anspruch 1, worin das Amin (c) ein cycloaliphatisches oder ein aliphatisches Amin ist.

**9.** Stoffgemisch nach Anspruch 1, worin n in der Formel (I) eine Zahl zwischen 2 und 6 bedeutet.

**10.** Stoffgemisch nach Anspruch 1, worin die Verbindung der Formel (I) ein Molekulargewicht zwischen 900 und 1100 aufweist.

**11.** Stoffgemisch nach Anspruch 1, das zusätzlich zu den Komponenten (a) bis (d) noch (e) einen Beschleuniger für die Reaktion des Epoxidharzes (a) mit dem latenten Härter (b) enthält.

**12.** Stoffgemisch nach Anspruch 11, worin der Beschleuniger (e) ein Imidazol oder ein Harnstoffderivat ist.

**13.** Faserverbund, imprägniert mit einem Stoffgemisch nach Anspruch 1.

**14.** Vernetzte Produkte erhältlich durch Härtung des Stoffgemisches nach Anspruch 1.

**15.** Prepregs erhältlich durch Imprägnierung eines Gewebes mit einem Stoffgemisch nach Anspruch 1 und anschliessendes Erhitzen des imprägnierten Gewebes, bis die Reaktion des Epoxidharzes (a) mit dem Amin (c) und dem Thiol (d) abgeschlossen ist, und ohne dass dabei die Umsetzung des Epoxidharzes (a) mit dem latenten Härter (b) einsetzt.

**16.** Laminate erhältlich durch vollständige Aushärtung des Faserverbundes nach Anspruch 13 oder der Prepregs nach Anspruch 15.

**17.** Klebstoffe, vorzugsweise Hotmelt-Reaktionskleber und Klebfilme, erhältlich durch Erhitzen eines Stoffgemisches nach Anspruch 1, bis die Reaktion des Epoxidharzes (a) mit dem Amin (c) und dem Thiol (d) abgeschlossen ist, und ohne dass dabei die Umsetzung des Epoxidharzes (a) mit dem latenten Härter (b) einsetzt.